(19) Europäisches Patentamt
European Patent Office
Office européen des brevets

(11) **EP 1 640 213 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(51) Int Cl.:
**B60Q 1/48** (2006.01)　　**B62D 15/02** (2006.01)

(21) Anmeldenummer: 05107336.9

(22) Anmeldetag: **10.08.2005**

(54) **Verfahren und System zur Unterstützung des Rangierens von Kraftfahrzeugen**

Parking assistance method and system for vehicles

Procédé et système d'aide aux monoeuvres de stationnement des véhicules

(84) Benannte Vertragsstaaten:
**DE ES FR GB IT SE**

(30) Priorität: **25.09.2004 DE 102004046631**

(43) Veröffentlichungstag der Anmeldung:
**29.03.2006 Patentblatt 2006/13**

(73) Patentinhaber: **Robert Bosch GmbH**
**70442 Stuttgart (DE)**

(72) Erfinder: **Lee, Wei-Chia**
**71229, Leonberg (DE)**

(56) Entgegenhaltungen:
**EP-A1- 1 470 967　　JP-A- 63 031 881**
**JP-A- 2000 339 595　　JP-A- 2001 118 198**
**JP-A- 2003 285 705**

**Beschreibung**

Stand der Technik

Die vorliegende Erfindung betrifft ein Verfahren zur elektronischen Unterstützung eines Park- oder Rangiervorgangs bei einem Kraftfahrzeug, wobei der Abstand des Kraftfahrzeugs zu im Umfeld des Kraftfahrzeugs vorhandenen Gegenständen durch mindestens eine Abstandsmesseinrichtung erfasst wird und ein Freigabesignal zur Signalisierung einer kollisionsfreien Fahrtmöglichkeit des Kraftfahrzeugs und/oder ein Stoppsignal zur Signalisierung einer drohenden Kollision des Kraftfahrzeugs erzeugbar ist.

Derartige Verfahren und Systeme sind bei Kraftfahrzeugen zur Unterstützung des Fahrers beim Einparken oder Ausparken oder allgemein beim Rangieren des Fahrzeugs bekannt. Dabei sollen drohende Kollisionen mit in der nahen Umgebung des Kraftfahrzeugs vorhandenen Gegenständen frühzeitig erkannt und signalisiert werden, um Unfälle zu verhindern. Insofern dienen sie auch der Erhöhung der Verkehrssicherheit.

Allgemein bekannt ist es beispielsweise, in Kraftfahrzeugen als sogenannte "Park Distance Controll" (PDC) bezeichnete Systeme vorzusehen, die mit Ultraschall-Abstandsmesseinrichtungen arbeiten, die üblicherweise entweder nur im Heckbereich oder im Heckbereich sowie im Frontbereich des Fahrzeugs angeordnet sind. Dabei wird der Abstand zu naheliegenden Gegenständen, insbesondere der hinter dem Fahrzeug verbleibende Freiraum gemessen und eine optische und/oder akustische Signaleinheit gibt dazu ein vom gemessenen Abstand abhängiges Signal ab. So kann der Abstand z.B. mittels verschiedenfarbiger Leuchtdioden angezeigt und/oder durch einen Intervall-Ton signalisiert werden, wobei eine Verkürzung der Intervalle eine Verringerung des verbleibenden Abstandes bedeutet. Derartige Abstandsmesseinrichtungen können auch auf der Basis anderer physikalischer Prinzipien, beispielsweise mit Radar- oder Infrarotmessung, ausgeführt sein. Derartige PDC-Systeme können den Fahrer allerdings lediglich darüber informieren, ob und ggf. in welchem quantisierten Abstand ein Hindernis vor oder hinter dem Fahrzeug vorhanden ist. Wenn der Fahrer an einem Hindernis vorbeifahren möchte, so muss er aus seiner eigenen Erfahrung heraus selber abschätzen, wie weit er beispielsweise zurücksetzen muss, um anschließend beim Vorwärtsfahren an diesem Hindernis vorbeizukommen. Aus diesem Grund sind häufig mehrere Versuche notwendig, bis der Fahrer sich hinreichend sicher ist, dass der Platz ausreicht, um kollisionsfrei an dem Hindernis vorbeizufahren.

Darüber hinaus ist es beispielsweise aus den Druckschriften DE 196 46 559 A1 oder DE 197 15 622 A1 bekannt, zusätzlich auch den Lenkwinkel des Kraftfahrzeugs zu erfassen, um zu ermitteln, ob eine kollisionsfreie Fahrt des Kraftfahrzeugs möglich ist. Mit Hilfe eines elektronischen Steuerungs- und/oder Regelungssystems kann auf Basis der erfassten Daten zur freien Parkfläche, zur aktuellen Fahrzeugposition und zum aktuellen Lenkwinkel ein Einparkvorgang errechnet und dem Fahrer angezeigt (DE 196 46 559 A1) oder auch durch automatische Bremseingriffe (DE 197 15 622 A1) unterstützt werden.

Ferner ist aus der DE 199 33 732 A1 als Ein-/Ausparkhilfe ein Verfahren bekannt, bei dem im Umfeld des Kraftfahrzeug vorhandene Gegenstände durch eine Abstandsmesseinrichtung sowie der aktuelle Lenkwinkel über einen Lenkwinkelsensor erfasst werden. Die erfassten Gegenstände und der aktuell erfasste Lenkwinkel werden in einer Rechner-Einheit ausgewertet und die Fahrspur bzw. der Fahrschlauch als prognostizierte Fahrtroute des Fahrzeugs wird in Abhängigkeit des aktuell eingeschlagenen Lenkwinkels berechnet. Eine Signalvorrichtung ist vorgesehen, die von der Rechnereinheit dann zur Erzeugung eines Freigabesignals angesteuert wird, wenn der aktuell eingeschlagene Lenkwinkel ausreichend ist, um ein störungsfreies Fahren zu ermöglichen.

Das Dokument EP-A-1470967 offenbart ein ähnliches Verfahren.

Hierbei ist es jedoch wie auch bei den vorgenannten Systemen und Verfahren unbedingt erforderlich, dass der momentan eingestellte Lenkwinkel erfasst wird, damit die Fahrspur bzw. der Fahrschlauch fehlerfrei berechnet werden kann. Die hierzu erforderlichen Lenkwinkelsensoren bedeuten als zusätzliche Bauteile einen erheblichen Aufwand sowohl hinsichtlich der Montage als auch bezüglich der Auswertung der erfassten Lenkwinkeldaten in der Steuerung. Dieser zusätzliche Aufwand führt zu entsprechend hohen Kosten des Systems, was einen entscheidenden Nachteil derartiger Systeme darstellt.

Die der vorliegenden Erfindung zugrundeliegende Problematik besteht also allgemein darin, ein verbessertes Verfahren der eingangs genannten Art zu schaffen, das den Fahrer wirkungsvoll beim Rangieren des Kraftfahrzeugs unterstützt, ohne hierzu den aktuellen Lenkwinkel erfassen zu müssen, und das somit nicht mehr die beschriebenen Nachteile von großem Aufwand und hohen Kosten aufweist.

Vorteile der Erfindung

Das erfindungsgemäße Verfahren gemäß Anspruch 1 weist gegenüber den bekannten Ausführungsformen den Vorteil auf, dass die Erfassung des aktuellen Lenkwinkels nicht mehr erforderlich ist. Es werden also keine Lenkwinkelsensoren benötigt, so dass der Aufwand bei der Montage eines entsprechenden Systems sowie die hiermit verbunden Kosten erheblich reduziert werden können. Die Funktionen des Verfahrens lassen sich ohne zusätzliche Sensorik leicht durch eine Erweiterung der bei PDC-Syastemen meist vorhandenen Software realisieren.

Dennoch führt die Anwendung des erfindungsgemäßen Verfahrens zu einer effektiven Unterstützung des Fahrers eines Kraftfahrzeugs nicht nur beim Ein- oder Ausparken, sondern auch beim Wenden oder sonstigen Rangiervorgängen, indem Kollisionen mit im Umfeld des Kraftfahrzeugs vorhandenen Gegenständen, insbesondere mit anderen Fahrzeugen, verhindert werden können.

Die der vorliegenden Erfindung zugrundeliegende Idee besteht darin, dass das Freigabesignal dann erzeugt wird, wenn der Abstand zu erfassten Gegenständen so groß ist, dass bei vollem Lenkeinschlag eine kollisionsfreie Fahrt des Kraftfahrzeugs an den erfassten Gegenständen vorbei möglich ist und/oder dass das Stoppsignal dann erzeugt wird, wenn der Abstand zu mindestens einem erfassten Gegenstand so gering ist, dass auch bei vollem Lenkeinschlag eine kollisionsfreie Fahrt des Kraftfahrzeugs an dem erfassten Gegenstand vorbei nicht möglich ist.

Auf diese Weise erhält der Fahrer rechtzeitig einen Hinweis darauf, ob der Abstand des Kraftfahrzeugs zu im Umfeld des Kraftfahrzeugs vorhandenen Gegenständen ausreicht, um mit volleingeschlagenem Lenkrad kollisionsfrei an den erfassten Gegenständen vorbeifahren zu können. Der Fahrer ist hierbei nicht mehr ausschließlich auf seine eigene Erfahrung angewiesen, so dass insbesondere auch fremde oder neue Fahrzeuge sicher rangiert werden können.

Wird das Fahrzeug mit voll eingeschlagenen Lenkrädern gesteuert, so ergibt sich die maximale Krümmung der Fahrkurve bzw. der minimale Radius $r_{min}$ = $L/\tan(\delta_{max})$. Diese Krümmung lässt sich im Vorfeld für ein Kraftfahrzeug anhand des maximalen Lenkwinkels ($\delta_{max}$) und des Radabstands (L) berechnen. Sie ist eine unveränderliche Kenngröße und beschreibt den Wendekreis des Fahrzeugs. Aus dieser Größe lässt sich der erforderliche Mindestabstand zu Hindernissen ausrechnen, um bei vollem Lenkeinschlag kollisionsfrei an dem erfassten Hindernis vorbeifahren zu können.

Vorteilhafte Weiterbildungen und Verbesserungen des erfindungsgemäßen Verfahrens ergeben sich aus den abhängigen Ansprüchen.

So ist es besonders vorteilhaft, wenn ein aktuell zwischen einem Kraftfahrzeug und einem Gegenstand gemessener Abstand mit dem zuvor errechneten Mindestabstand verglichen wird, um ein Freigabesignal zu erzeugen, wenn der gemessene Abstand den berechneten Mindestabstand erreicht oder übersteigt und/oder um ein Stoppsignal zu erzeugen, wenn der gemessene Abstand kleiner ist als der berechnete Mindestabstand. Vorteilhafterweise braucht der erforderliche Mindestabstand nur einmal im Voraus berechnet zu werden, da er als von dem bei einem Kraftfahrzeug konstanten Wendekreis sich nicht ändert.

Erreicht beispielsweise der beim Rückwärtsfahren eines Ausparkvorgangs nach vorne gemessene Abstand den berechneten Abstand, dann benachrichtigt das System den Fahrer darüber, dass er die Rückwärtsbewegung anhalten und anschließend mit maximalem Lenkeinschlag vorwärts kollisionsfrei aus der Parklücke herausfahren kann. Ebenso ist es natürlich möglich, dass ein Stoppsignal anzeigt, dass der zu einem Hindernis gemessen Abstand noch kleiner ist als der berechnete Abstand, so dass selbst bei maximalem Lenkradeinschlag eine kollisionsfreie Fahrt des Kraftfahrzeugs an dem Hindernis vorbei noch nicht möglich ist.

Gemäß einer besonders bevorzugten Ausführungsform der Erfindung ist ferner vorgesehen, dass ein Freigabesignal erst dann erzeugt wird, wenn der gemessene Abstand den berechneten Mindestabstand um einen bestimmten Grenzwert übersteigt, und dass ein Warnsignal erzeugt wird, wenn der gemessene Abstand den berechneten Mindestabstand exakt erreicht oder lediglich um einen Betrag übersteigt, der unterhalb des Grenzwerts liegt. Auf diese Weise wird erreicht, dass ein Freigabesignal erst bei einem vom Grenzwert abhängigen zusätzlichen Sicherheitsabstand erzeugt wird, was eine kollisionsfreie Fahrt mit einer entsprechend hohen Sicherheit ermöglicht. Demgegenüber zeigt das Warnsignal an, dass eine kollisionsfreie Vorbeifahrt an dem erfassten Hindernis zwar grundsätzlich möglich ist, aber dennoch eine erhöhte Aufmerksamkeit des Fahrers geboten ist, um gegebenenfalls ausreichend schnell anhalten zu können, falls es beispielsweise aufgrund von Messfehlern oder Bewegungen des Hindernisses wider Erwarten doch zu einer Kollision kommen sollte.

Vorzugsweise kann der Grenzwert dabei vom Fahrer variabel eingestellt werden, um unterschiedlichen Sicherheitsbedürfnissen verschiedener Fahrer gerecht werden zu können.

Eine besonders komfortable Ausführungsform des erfindungsgemäßen Verfahrens kann dadurch erreicht werden, dass nach der Erzeugung des ersten Freigabesignals und/oder Warnsignals ermittelt wird, ob der maximale Lenkeinschlag des Kraftfahrzeugs tatsächlich eingestellt ist oder nicht, und dass ein zweites Freigabesignal erzeugt wird, wenn der Lenkeinschlag maximal ist und/oder dass ein zweites Stoppsignal erzeugt wird, wenn der Lenkeinschlag nicht maximal ist. Auf diese Weise erhält der Fahrer eine zusätzliche Kontrolle, ob die grundsätzlich kollisionsfrei mögliche Fahrtroute auch tatsächlich eingehalten werden kann, oder ob weitere Korrekturen erforderlich sind, da die Voraussetzung eines maximalen Lenkeinschlags nicht erfüllt ist. Für diese vorteilhafte Ausführungsvariante ist im Gegensatz zu den vorbekannten Verfahren und Systemen kein Lenkwinkelsensor erforderlich, da nicht der aktuelle Lenkwinkel erfasst werden muss, sondern bereits die Feststellung ausreicht, ob ein bestimmter Zustand, nämlich die Einstellung des maximalen Lenkwinkels, vorliegt oder nicht. Vorzugsweise unterscheiden sich das zweite Freigabesignal bzw. das zweite Stoppsignal von dem ersten Freigabesignal bzw. von dem ersten Stoppsignal.

*Als Weiterbildung der Erfindung wird ferner vorgeschlagen, dass ein Freigabesignal und/oder Stoppsignal und/oder Warnsignal nur während der vom Fahrer vorgenommenen Auslösung eines Bestätigungssignals*

*erzeugbar ist. Die jeweiligen Signale werden dabei nur dann erzeugt, wenn es vom Fahrer insbesondere über einen entsprechenden Schalter oder Taster angefordert wird, so dass es nicht zu unerwünschten Signalen beispielsweise bei dichterem Auffahren an einer Ampel kommen kann. Alternativ könnte auch ein Ausschalter zum Deaktivieren des erfindungsgemäßen Systems angeordnet werden.*

Gemäß einer alternativen Ausführungsform der Erfindung kann auch vorgesehen werden, dass ein Freigabesignal und/oder Stoppsignal und/oder Warnsignal nur innerhalb einer vorbestimmte Zeitdauer nach der vom Fahrer vorgenommenen Auslösung eines Bestätigungssignals erzeugbar ist, wobei die vorbestimmte Zeitdauer vorzugsweise zwischen 3 und 30 Sekunden, insbesondere zwischen 5 und 15 Sekunden beträgt. Auch kann diese Zeitdauer variabel einstellbar sein. Der Fahrer braucht dann nicht über eine längere Zeit des Rangiervorgangs eine Bestätigung abzugeben, sondern es reicht aus, wenn er zuvor einmalig ein Bestätigungssignal abgegeben hat.

Besonders vorteilhaft ist es ferner, wenn das Freigabesignal und/oder Stoppsignal und/oder Warnsignal jeweils als akustisches Signal und/oder als optisches Signal erzeugt wird. Optische Signalgeber können vorzugsweise in ein Kombiinstrument eines Kraftfahrzeugs integriert werden und beispielsweise durch rote, gelbe und grüne Leuchtelemente ausgeführt sein.

Die vorliegende Erfindung betrifft auch ein System, das zur Durchführung des erfindungsgemäßen Verfahrens geeignet ist.

Ein dem vorangehend beschriebenen Verfahren entsprechendes System zur Unterstützung eines Park- oder Rangiervorgangs bei einem Kraftfahrzeug umfasst vorzugsweise mindestens eine an einem Fahrzeug angeordnete Abstandsmesseinrichtung zur Erfassung des Abstands zu im Umfeld des Kraftfahrzeugs vorhandenen Gegenständen, eine Steuerungseinheit zur Informationsverarbeitung bzw. zur Auswertung der erfassten Abstandsdaten, sowie eine von der Steuerungseinheit ansteuerbare Signaleinheit, durch die ein Freigabesignal zur Signalisierung einer kollisionsfreien Fahrtmöglichkeit des Kraftfahrzeugs und/oder ein Stoppsignal zur Signalisierung einer drohenden Kollision des Kraftfahrzeugs erzeugbar ist.

Erfindungsgemäß ist bei dem System die Signaleinheit von der Steuerungseinheit derart ansteuerbar, dass ein Freigabesignal dann erzeugt wird, wenn der Abstand zu erfassten Gegenständen so groß ist, dass bei vollem Lenkeinschlag eine kollisionsfreie Fahrt des Kraftfahrzeugs an den erfassten Gegenständen vorbei möglich ist und/oder dass das Stoppsignal dann erzeugt wird, wenn der Abstand zu mindestens einem erfassten Gegenstand so gering ist, dass auch bei vollem Lenkeinschlag eine kollisionsfreie Fahrt des Kraftfahrzeugs an dem erfassten Gegenstand vorbei nicht möglich ist.

Bei dem erfindungsgemäßen System können relativ preiswerte Abstandsmesseinrichtungen eingesetzt werden, ohne dass aufwendige Lenkwinkelsensoren erforderlich sind. Das erfindungsgemäße System kann daher besonders kostengünstig ausgeführt werden.

Besonders vorteilhaft ist es dabei, wenn das System Speichermittel aufweist, in denen eine das erfindungsgemäße Verfahren ausführende Software speicherbar ist. In den Speichermitteln wird vorzugsweise auch der erforderliche Mindestabstand für das Kraftfahrzeug abgespeichert, der für die Ausführung des Verfahrens herangezogen werden kann.

Zeichnungen

In den Zeichnungen sind Ausführungsbeispiele der Erfindung dargestellt, die in der nachfolgenden Beschreibung näher erläutert werden. Es zeigen:

Figur 1: eine schematische Darstellung der Bewegungsbahnen der Eckpunkte eines Kraftfahrzeugs bei maximalem Lenkeinschlag;

Figuren 2a-2c: eine schematische Darstellung der Anwendung des erfindungsgemäßen Verfahrens bei einem Ausparkvorgang eines Kraftfahrzeugs mit seitlich nebeneinander geparkten Fahrzeugen; und

Figuren 3a-3c: eine schematische Darstellung der Anwendung des erfindungsgemäßen Verfahrens bei einem Ausparkvorgang eines Kraftfahrzeugs mit hintereinander geparkten Fahrzeugen.

Beschreibung der Ausführungsbeispiele

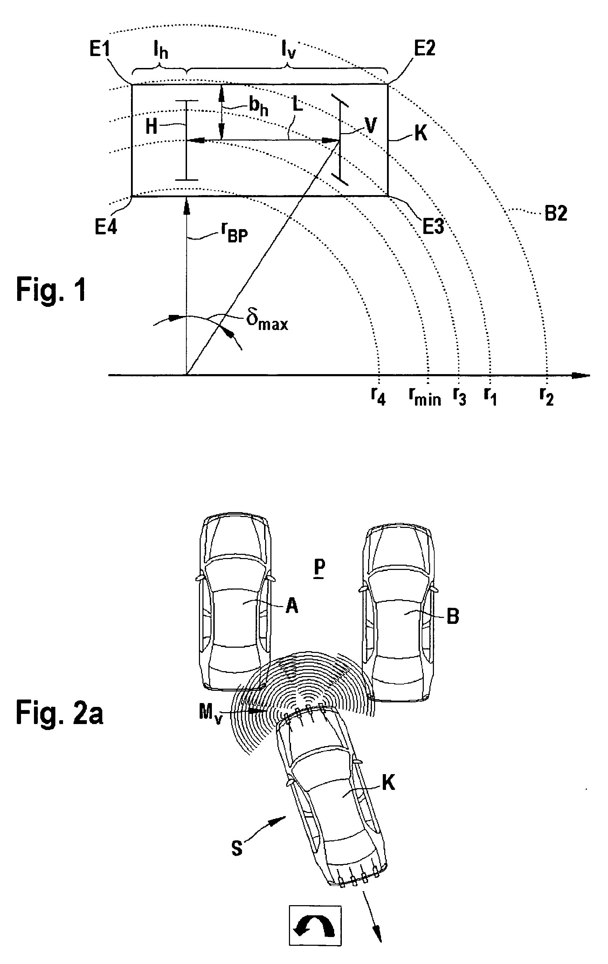

In Figur 1 sind die Radien und Bewegungsbahnen dargestellt, auf denen sich die vier Eckpunkte E1 bis E4 eines Kraftfahrzeugs K bei maximalem Lenkeinschlag ($\delta_{max}$) bewegen. Sie ergeben sich aus dem für ein Kraftfahrzeug K konstant feststehenden Wendekreis bzw. minimalen Radius $r_{min} = L/\tan(\delta_{max})$. Dabei bedeutet ($\delta_{max}$) den maximalen Lenkwinkel und die Größe L den Abstand zwischen den beiden Achsen H und V des Kraftfahrzeugs K.

Aus dieser Größe des minimalen Radius $r_{min}$ lässt sich der erforderliche Mindestabstand zu Hindernissen ausrechnen, um bei vollem Lenkeinschlag ($\delta_{max}$) kollisionsfrei mit dem Kraftfahrzeug an erfassten Gegenständen vorbeifahren zu können. In diese Berechnung fließen ferner die halbe Breite $b_h$ des Kraftfahrzeugs K sowie der Abstand $1_h$ vom Mittelpunkt der Hinterachse H bis zum Fahrzeugheck und/oder der Abstand $1_v$ vom Mittelpunkt der Hinterachse H bis zur Fahrzeugfront ein, wobei das Heck und die Front zur Vereinfachung hier jeweils als gerade Konturen ausgebildet sind. Für die Bewegungsbahnen bzw. Kurvenradien $r_1$ bis $r_4$ der vier Eckpunkte E1 bis E4 gelten die folgenden Formeln:

$$r_1 = \sqrt{(r_{\min} + b_h)^2 + L_h^2}$$

$$r_2 = \sqrt{(r_{\min} + b_h)^2 + L_v^2}$$

$$r_3 = \sqrt{(r_{\min} - b_h)^2 + L_v^2}$$

$$r_4 = \sqrt{(r_{\min} - b_h)^2 + L_h^2}$$

Aus den sich hieraus ergebenden Kurvenbahnen können die erforderlichen Mindestabstände für eine kollisionsfreie Fahrt des Kraftfahrzeugs K ermittelt werden. Bei der in Figur 1 dargestellten Fahrzeugbewegung einer Rechtskurve ist dabei die vordere linke Fahrzeugecke E2 mit der durch $r_2$ definierten Kurvenbahn B2 maßgebend. Radial innerhalb sowie auf dieser Kurvenbahn B2 darf sich kein Hindernis befmden, damit eine kollisionsfreie Fahrt des Kraftfahrzeugs K möglich ist.

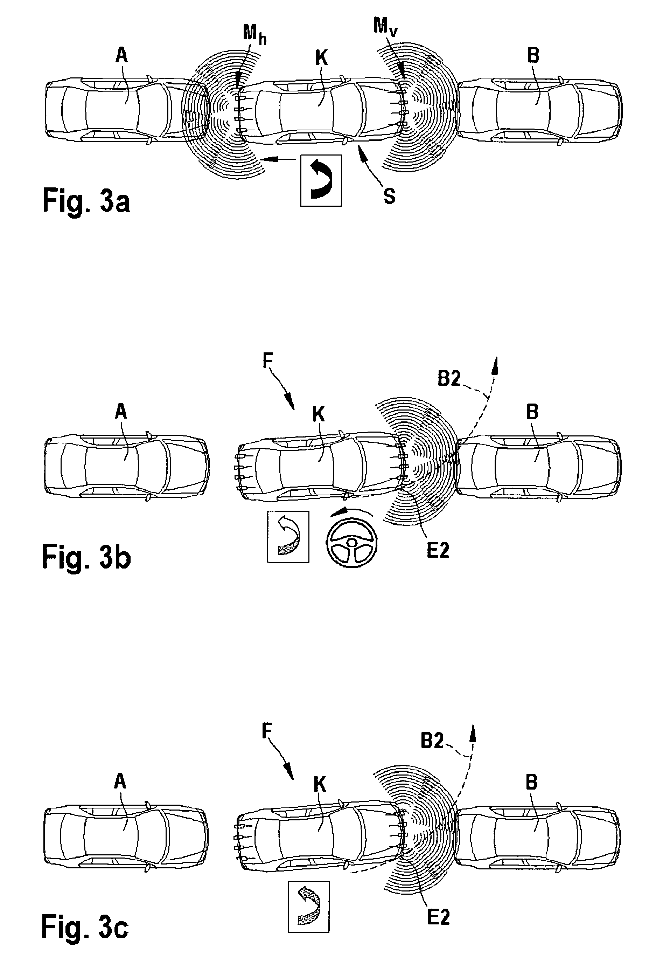

Bei den in den Figuren 2a bis 2c sowie 3a bis 3c gezeigten Ausführungsformen der Erfindung ist ein Kraftfahrzeug K als Abstandsmesseinrichtung mit vier vorne an der Fahrzeugfront angeordneten Abstandssensoren $M_v$ ausgestattet, die den Abstand zu weiteren eine Parklücke P begrenzenden Fahrzeugen A und B erfassen und an eine Steuereinheit zur Ausführung des erfindungsgemäßen Verfahrens übermitteln. Das in Figur 2a dargestellte Kraftfahrzeug K wird zunächst rückwärts nach hinten rechts aus der Parklücke P herausgefahren. Das erfindungsgemäße Verfahren unterstützt den Fahrer dabei in der Ermittlung des Punktes F, an dem er die Rückwärtsfahrt beenden und mit maximalem Lenkradeinschlag kollisionsfrei nach vorne links an Fahrzeug A vorbeifahren kann.
In Figur 2a hat das Kraftfahrzeug K den Punkt F noch nicht erreicht, so dass von dieser Position S aus selbst mit maximalem Lenkeinschlag ($\delta_{max}$) eine kollisionsfreie Fahrt an Fahrzeug A vorbei unmöglich ist. In dieser Position S kann daher ein Stoppsignal erzeugt werden, um den Fahrer auf die drohende Kollision hinzuweisen.

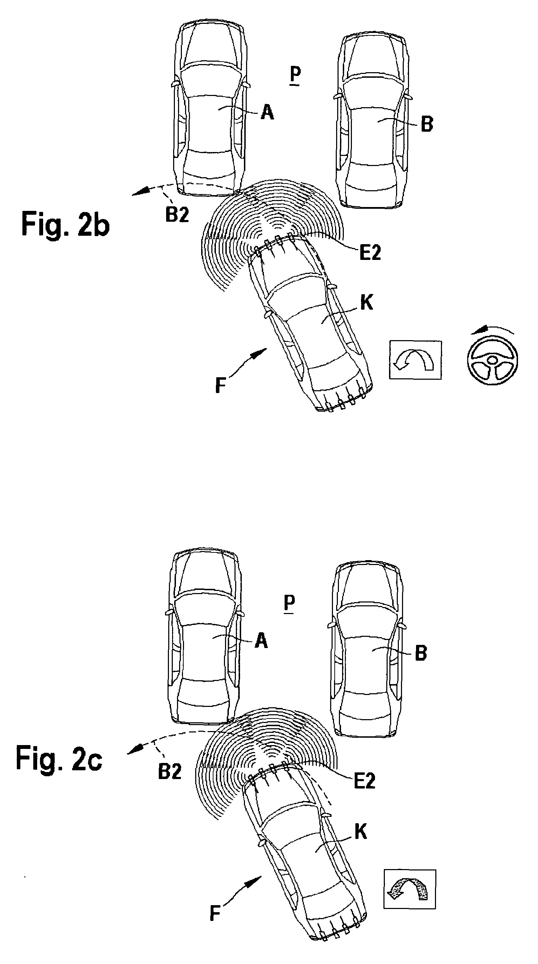

In Figur 2b hat das Kraftfahrzeug K den Punkt F erreicht, von dem aus mit maximalem Lenkeinschlag ($\delta_{max}$) theoretisch eine kollisionsfreie Fahrt an Fahrzeug A vorbei möglich wäre. In dieser Position F wird daher ein Freigabesignal erzeugt, um dem Fahrer die Möglichkeit einer kollisionsfreien Fahrt mitzuteilen. Allerdings hat der Fahrer hier noch nicht den maximalen Lenkwinkel ($\delta_{max}$) eingestellt, so dass es bei einer Vorwärtsfahrt zu einer Kollision mit Fahrzeug A kommen würde. In dieser Position F kann daher vorteilhafterweise ein zusätzliches Stoppsignal erzeugt werden, sobald der Fahrer eine Vorwärtsfahrt beginnt, ohne den maximalen Lenkwinkel

($\delta_{max}$) eingestellt zu haben, um den Fahrer auf die drohende Kollision aufmerksam zu machen.

Bei der in Figur 2c dargestellten Position befmdet sich das Kraftfahrzeug K auch am Punkt F, an dem ein erstes Freigabesignal erzeugt wird. Sobald der Fahrer eine Vorwärtsfahrt beginnt wird hier vorteilhafterweise ein zweites Freigabesignal erzeugt, da der Lenkwinkel hier maximal eingestellt ist, so dass die theoretisch mögliche kollisionsfreie Fahrt an Fahrzeug A vorbei auch tatsächlich durchgeführt werden kann.

Die Figuren 3a bis 3c zeigen einen entsprechenden Ausparkvorgang, wobei jedoch die Fahrzeuge A und B nicht seitlich neben dem Kraftfahrzeug K, sondern davor und dahinter geparkt sind. Zusätzlich ist das Kraftfahrzeug K hier auch mit vier hinten am Fahrzeugheck angeordneten Abstandssensoren $M_h$ versehen, die in Figur 3a den Fahrer in an sich bekannter Weise beim Zurücksetzen in der Parklücke P unterstützen.

In Figur 3a befindet sich das Kraftfahrzeug K in der Position S, von der aus auch mit maximalem Lenkeinschlag ($\delta_{max}$) eine kollisionsfreie Fahrt am vorderen Fahrzeug B vorbei nicht möglich ist.

In Figur 3b hat das Kraftfahrzeug K wiederum den Punkt F erreicht, von dem aus mit maximalem Lenkeinschlag ($\delta_{max}$) zwar eine kollisionsfreie Fahrt an Fahrzeug B vorbei möglich wäre, allerdings nicht mit dem hier eingestellten Lenkwinkel, der nicht dem maximalen Lenkwinkel ($\delta_{max}$) entspricht.

Bei der in Figur 3c dargestellten Position befindet sich das Kraftfahrzeug K am Punkt F und es ist der maximale Lenkwinkel ($\delta_{max}$) eingestellt, so dass eine kollisionsfreie Fahrt an Fahrzeug B vorbei aus der Parklücke P heraus durchgeführt werden kann.

Selbstverständlich werden auch bei dem in Figur 3a bis 3c dargestellten Rangiervorgang die erfindungsgemäßen Signale erzeugt, um den Fahrer jeweils auf drohende Kollisionen oder auf die Möglichkeit einer kollisionsfreien Fahrt hinzuweisen.

Obwohl die vorliegende Erfindung hier lediglich anhand bevorzugter Ausführungsbeispiele beschrieben wurde, ist sie nicht darauf beschränkt, sondern in vielfältiger Weise modifizierbar. Insbesondere ist das erfindungsgemäße Verfahren nicht nur bei Ausparkvorgängen, sondern auch beim Einparken sowie bei Wendemanövern einsetzbar.

Auch kann das erfindungsgemäße Verfahren durch aus dem Stand der Technik bekannte automatische Steuerungseingriffe, insbesondere durch einen selbsttätigen Bremseneingriff zur Verhinderung einer drohenden Kollision ergänzt werden.

**Patentansprüche**

1. Verfahren zur Unterstützung eines Park- oder Rangiervorgangs bei einem Kraftfahrzeug (K), wobei der Abstand des Kraftfahrzeugs (K) zu im Umfeld des Kraftfahrzeugs (K) vorhandenen Gegenständen (A, B) durch mindestens eine Abstandsmesseinrichtung ($M_v$, $M_h$) erfasst wird und ein Freigabesignal zur Signalisierung einer kollisionsfreien Fahrtmöglichkeit des Kraftfahrzeugs (K) und/oder ein Stoppsignal zur Signalisierung einer drohenden Kollision des Kraftfahrzeugs (K) erzeugbar ist,
**dadurch gekennzeichnet,**
**dass** ohne Erfassung des aktuellen Lenkwinkels des Kraftfahrzeugs (K) das Freigabesignal dann erzeugt wird, wenn der Abstand zu erfassten Gegenständen (A, B) so groß ist, dass bei maximalem Lenkeinschlag ($\delta_{max}$) eine kollisionsfreie Fahrt des Kraftfahrzeugs (K) an den erfassten Gegenständen (A, B) vorbei möglich ist und/oder dass das Stoppsignal dann erzeugt wird, wenn der Abstand zu mindestens einem erfassten Gegenstand (A, B) so gering ist, dass auch bei maximalem Lenkeinschlag ($\delta_{max}$) eine kollisionsfreie Fahrt des Kraftfahrzeugs (K) an dem erfassten Gegenstand (A, B) vorbei nicht möglich ist.

2. Verfahren nach Anspruch 1, **dadurch gekennzeichnet, dass** in Abhängigkeit von dem Wendekreis eines Kraftfahrzeugs (K) der erforderliche Mindestabstand zu einem Gegenstand (A, B) errechnet wird, um mit dem Kraftfahrzeug (K) bei maximalem Lenkeinschlag ($\delta_{max}$) kollisionsfrei an dem Gegenstand (A, B) vorbeifahren zu können, und dass ein aktuell zu einem Gegenstand (A, B) gemessener Abstand mit dem errechneten Mindestabstand verglichen wird, um ein Freigabesignal zu erzeugen, wenn der gemessene Abstand den berechneten Mindestabstand erreicht oder übersteigt und/oder um ein Stoppsignal zu erzeugen, wenn der gemessene Abstand kleiner ist als der berechnete Mindestabstand.

3. Verfahren nach Anspruch 2, **dadurch gekennzeichnet, dass** ein Freigabesignal nur dann erzeugt wird, wenn der gemessene Abstand den berechneten Mindestabstand um einen Grenzwert übersteigt, und dass ein Warnsignal erzeugt wird, wenn der gemessene Abstand den berechneten Mindestabstand erreicht oder um einen Betrag übersteigt, der unterhalb des Grenzwerts liegt.

4. Verfahren nach Anspruch 3, **dadurch gekennzeichnet, dass** der Grenzwert variabel einstellbar ist.

5. Verfahren nach einem der vorherigen Ansprüche, **dadurch gekennzeichnet, dass** nach der Erzeugung des ersten Freigabesignals und/oder Warnsignals ermittelt wird, ob der maximale Lenkeinschlag ($\delta_{max}$) des Kraftfahrzeugs (K) eingestellt ist, und dass ein zweites Freigabesignal erzeugt wird, wenn der Lenkeinschlag maximal ist und/oder dass ein zweites Stoppsignal erzeugt wird, wenn der Lenkeinschlag nicht maximal ist.

6. Verfahren nach einem der vorherigen Ansprüche, **dadurch gekennzeichnet, dass** ein Freigabesignal und/oder Stoppsignal und/oder Warnsignal nur während der Auslösung eines Bestätigungssignals erzeugbar ist.

7. Verfahren nach einem der Ansprüche 1 bis 5, **dadurch gekennzeichnet, dass** ein Freigabesignal und/oder Stoppsignal und/oder Warnsignal nur innerhalb einer vorbestimmte Zeitdauer nach der Auslösung eines Bestätigungssignals erzeugbar ist, wobei die vorbestimmte Zeitdauer vorzugsweise zwischen 3 und 30 Sekunden, insbesondere zwischen 5 und 15 Sekunden beträgt.

8. Verfahren nach einem der vorherigen Ansprüche, **dadurch gekennzeichnet, dass** das Freigabesignal und/oder Stoppsignal und/oder Warnsignal jeweils als akustisches Signal und/oder als optisches Signal, insbesondere in einem Kombiinstrument des Fahrzeugs (K) erzeugt wird.

9. System zur Unterstützung eines Park- oder Rangiervorgangs bei einem Kraftfahrzeug (K), **dadurch gekennzeichnet, dass** es zur Durchführung des Verfahrens nach einem der Ansprüche 1 bis 8 geeignet ist und Speichermittel umfasst, in denen ein Verfahren gemäß einem der Ansprüche 1 bis 8 ausführendes Computerprogramm gespeichert ist.

10. System zur Unterstützung eines Park- oder Rangiervorgangs bei einem Kraftfahrzeug (K), umfassend mindestens eine an einem Kraftfahrzeug (K) angeordnete Abstandsmesseinrichtung ($M_v$, $M_h$) zur Erfassung des Abstands zu im Umfeld des Kraftfahrzeugs (K) vorhandenen Gegenständen (A, B), eine Steuerungseinheit zur Auswertung der erfassten Abstandsdaten, sowie eine von der Steuerungseinheit ansteuerbare Signaleinheit, durch die ein Freigabesignal zur Signalisierung einer kollisionsfreien Fahrtmöglichkeit des Kraftfahrzeugs (K) und/oder ein Stoppsignal zur Signalisierung einer drohenden Kollision des Kraftfahrzeugs (K) erzeugbar ist,
**dadurch gekennzeichnet,**
**dass** die Signaleinheit von der Steuerungseinheit derart ansteuerbar ist, dass ohne Erfassung des aktuellen Lenkwinkels des Kraftfahrzeugs (K) ein Freigabesignal dann erzeugt wird, wenn der Abstand zu erfassten Gegenständen (A, B) so groß ist, dass bei maximalem Lenkeinschlag ($\delta_{max}$) eine kollisionsfreie Fahrt des Kraftfahrzeugs (K) an den erfassten Gegenständen (A, B) vorbei möglich ist und/oder dass das Stoppsignal dann erzeugt wird, wenn der Abstand zu mindestens einem erfassten Gegenstand (A, B) so gering ist, dass auch bei maximalem Lenkeinschlag ($\delta_{max}$) eine kollisionsfreie Fahrt des Kraftfahrzeugs (K) an dem erfassten Gegenstand (A, B) vorbei nicht möglich ist.

## Claims

1. Method for assisting a parking or manoeuvring process of a motor vehicle (K), wherein the distance between the motor vehicle (K) and objects (A, B) located in the surroundings of the motor vehicle (K) is sensed by at least one distance-measuring device ($M_v$, $M_h$), and an enable signal for signalling a collision-free driving possibility of the motor vehicle (K) and/or a stop signal for signalling an imminent collision of the motor vehicle (K) can be generated, **characterized in that**, without sensing the current steering angle of the motor vehicle (K), the enable signal is generated when the distance from sensed objects (A, B) is so large that given a maximum steering lock ($\delta_{max}$) collision-free travel of the motor vehicle (K) past the sensed objects (A, B) is possible, and/or in that the stop signal is generated when the distance from at least one sensed object (A, B) is so short that even in the case of a maximum steering lock ($\delta_{max}$) collision-free travel of the motor vehicle (K) past the sensed object (A, B) is not possible.

2. Method according to Claim 1, **characterized in that** the necessary minimum distance from an object (A, B) is calculated as a function of the turning circle of a motor vehicle (K) in order to be able to travel past the object (A, B) in a collision-free fashion with the motor vehicle (K) in the case of a maximum steering lock ($\delta_{max}$), and **in that** a distance which is currently measured from an object (A, B) is compared with the calculated minimum distance in order to generate an enable signal if the measured distance reaches or exceeds the calculated minimum distance and/or in order to generate a stop signal if the measured distance is shorter than the calculated minimum distance.

3. Method according to Claim 2, **characterized in that** an enable signal is generated only when the measured distance exceeds the calculated minimum distance by a limiting value, and **in that** a warning signal is generated if the measured distance reaches the calculated minimum distance or exceeds it by an absolute value which is below the limiting value.

4. Method according to Claim 3, **characterized in that** the limiting value can be set in a variable fashion.

5. Method according to one of the preceding claims, **characterized in that** after the generation of the first enable signal and/or warning signal it is determined whether the maximum steering lock ($\delta_{max}$) of the motor vehicle (K) is set, and **in that** a second enable signal is generated if the steering lock is at a maximum and/or **in that** a second stop signal is generated if the steering lock is not at a maximum.

6. Method according to one of the preceding claims, **characterized in that** an enable signal and/or stop signal and/or warning signal can be generated only during the triggering of an activation signal.

7. Method according to one of Claims 1 to 5, **characterized in that** an enable signal and/or stop signal and/or warning signal can be generated only within a predetermined time period after the triggering of an activation signal, wherein the predetermined time period is preferably between 3 and 30 seconds, in particular between 5 and 15 seconds.

8. Method according to one of the preceding claims, **characterized in that** the enable signal and/or stop signal and/or warning signal is generated in each case as an acoustic signal and/or as an optical signal, in particular in a combination instrument of the vehicle (K).

9. System for assisting a parking process or manoeuvring process of a motor vehicle (K), **characterized in that** said system is suitable for carrying out the method according to one of Claims 1 to 8 and comprises storage means in which a computer program which carries out methods according to one of Claims 1 to 8 is stored.

10. System for assisting a parking or manoeuvring process of a motor vehicle (K), comprising at least one distance-measuring device ($M_v$, $M_h$), arranged on a motor vehicle (K), for sensing the distance from objects (A, B) located in the surroundings of the motor vehicle (K), a control unit for evaluating the acquired distance data, and a signal unit which can be actuated by the control unit and which can generate an enable signal for signalling a collision-free travel possibility of the motor vehicle (K) and/or a stop signal for signalling an imminent collision of the motor vehicle (K), **characterized in that** the signal unit can be actuated by the control unit in such a way that without sensing the current steering angle of the motor vehicle (K), an enable signal is generated when the distance from sensed objects (A, B) is so large that given a maximum steering lock ($\delta_{max}$) collision-free travel of the motor vehicle (K) past the sensed objects (A, B) is possible, and/or in that the stop signal is generated when the distance from at least one sensed object (A, B) is so short that even in the case of a maximum steering lock ($\delta_{max}$) collision-free travel of the motor vehicle (K) past the sensed object (A, B) is not possible.

## Revendications

1. Procédé d'assistance à une opération de stationnement ou de manoeuvre d'un véhicule automobile (K), dans lequel la distance entre le véhicule automobile (K) et des objets (A, B) présents dans l'environnement du véhicule automobile (K) est détectée par au moins un dispositif ($M_v$, $M_h$) de mesure de distance et un signal de libération qui signale une possibilité de déplacement sans collision du véhicule automobile (K) et/ou un signal d'arrêt qui signale le risque d'une collision du véhicule (K) peuvent être formés, **caractérisé en ce que**

sans détection de l'angle de direction en cours du véhicule automobile (K), le signal de libération est formé lorsque la distance entre des objets (A, B) détectés est suffisamment grande que pour qu'une intervention maximale ($\delta_{max}$) sur la direction permette un déplacement du véhicule automobile (K) sans collision sur les objets (A, B) détectés et/ou **en ce que** le signal d'arrêt est formé lorsque la distance par rapport à au moins un objet (A, B) détecté est suffisamment basse pour que même une intervention maximale ($\delta_{max}$) sur la direction ne permette pas un déplacement du véhicule automobile (K) sans collision sur l'objet (A, B) détecté.

2. Procédé selon la revendication 1, **caractérisé en ce que** la distance minimale par rapport à un objet (A, B) est calculée en fonction du cercle de virage du véhicule automobile (K) pour qu'une intervention maximale ($\delta_{max}$) sur la direction permette de déplacer le véhicule automobile (K) sans qu'el entre en collision avec l'objet (A, B) et **en ce qu'**une distance effectivement mesurée par rapport à un objet (A, B) est comparée avec la distance minimale calculée pour former un signal de libération lorsque la distance mesurée atteint la distance minimale calculée ou la dépasse et/ou pour former un signal d'arrêt lorsque la distance mesurée est plus petite que la distance minimale calculée.

3. Procédé selon la revendication 2, **caractérisé en ce qu'**un signal de libération n'est formé que si la distance mesurée dépasse d'une valeur limite la distance minimale calculée et **en ce qu'**un signal d'alarme est formé lorsque la distance mesurée atteint la distance minimale calculée ou la dépasse d'une valeur inférieure à la valeur limite.

4. Procédé selon la revendication 3, **caractérisé en ce que** la valeur limite peut être réglée de manière variable.

5. Procédé selon l'une des revendications précédentes, **caractérisé en ce qu'**après la formation du premier signal de libération et/ou du premier signal d'alerte, il détermine si l'intervention maximale ($\delta_{max}$) sur la direction du véhicule automobile (K) a été établie et **en ce qu'**un deuxième signal de libération est formé lorsque l'intervention sur la direction est maximale et/ou **en ce qu'**un deuxième signal d'arrêt est formé lorsque l'intervention sur la direction n'est pas maximale.

6. Procédé selon l'une des revendications précédentes, **caractérisé en ce qu'**un signal de libération, un signal d'arrêt et/ou un signal d'alarme ne peuvent être formés qu'après l'envoi d'un signal d'activation.

7. Procédé selon l'une des revendications 1 à 5, **caractérisé en ce qu'**un signal de libération, un signal d'arrêt et/ou un signal d'alarme ne peuvent être formés que pendant une durée prédéterminée qui suit l'émission d'un signal d'activation, la durée prédéterminée étant de préférence comprise entre 3 et 30 secondes et en particulier entre 5 et 15 secondes.

8. Procédé selon l'une des revendications précédentes, **caractérisé en ce que** le signal de libération, le signal d'arrêt et/ou le signal d'alarme sont formés comme signal acoustique et/ou comme signal optique, en particulier dans un instrument combiné du véhicule (K).

9. Système d'assistance à une opération de stationnement ou de manoeuvre d'un véhicule automobile (K), **caractérisé en ce qu'**il permet de mettre en oeuvre le procédé selon l'une des revendications 1 à 8 et **en ce qu'**il comprend des moyens de mémoire dans lesquels un programme informatique exécutant un procédé selon l'une des revendications 1 à 8 est conservé.

10. Système d'assistance à une opération de stationnement ou de manoeuvre d'un véhicule automobile (K), comprenant au moins un dispositif ($M_v$, $M_h$) de mesure de distance disposé dans le véhicule automobile (K) et détectant la distance par rapport à des objets (A, B) présents dans l'environnement du véhicule automobile (K), une unité de commande qui évalue les données de distance saisies ainsi qu'une unité de signalisation qui peut être commandée par l'unité de commande et par laquelle un signal de libération qui signale la possibilité que le véhicule automobile (K) suive un parcours sans collision et/ou un signal d'arrêt qui signale un risque de collision du véhicule (K) peuvent être formés, **caractérisé en ce que**

l'unité de signalisation peut être commandée par l'unité de commande de telle sorte que sans détection de l'angle de direction en cours du véhicule automobile (K), le signal de libération est formé lorsque la distance entre des objets (A, B) détectés est suffisamment grande que pour qu'une intervention maximale ($\delta_{max}$) sur la direction permette un déplacement du véhicule automobile (K) sans collision sur les objets (A, B) détectés et/ou **en ce que** le signal d'arrêt est formé lorsque la distance par rapport à au moins un objet (A, B) détecté est suffisamment basse pour que même une intervention maximale ($\delta_{max}$) sur la direction ne permette pas un déplacement du véhicule automobile (K) sans collision sur l'objet (A, B) détecté.

**Fig. 1**

**Fig. 2a**

Fig. 2b

P

A

B

B2

E2

K

F

Fig. 2c

P

A

B

B2

E2

K

F

$M_h$   $M_v$

A   K   B

**Fig. 3a**

S

F

A   K   B

B2

E2

**Fig. 3b**

F

A   K   B

B2

E2

**Fig. 3c**

**EP 1 640 213 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19646559 A1
- DE 19715622 A1
- DE 19933732 A1
- EP 1470967 A

13